# EUROPÄISCHE PATENTSCHRIFT

(11) **EP 3 435 272 B1**
(45) Veröffentlichungstag und Bekanntmachung des Hinweises auf die Patenterteilung: **04.11.2020**
(21) Anmeldenummer: 17183528.3
(22) Anmeldetag: 27.07.2017
(51) Int. Cl.: G06F 21/64, H04L 29/06

(54) **VERFAHREN UND VORRICHTUNG ZUR IDENTIFIKATION EINES ADDITIV GEFERTIGTEN WERKSTÜCKS**
METHOD AND DEVICE FOR IDENTIFYING AN ADDITIVE WORK PIECE
PROCÉDÉ ET DISPOSITIF D'IDENTIFICATION D'UNE PIÈCE D'USINAGE PRODUITE PAR FABRICATION ADDITIVE

(43) Veröffentlichungstag der Anmeldung: 30.01.2019
(73) Patentinhaber: Siemens Aktiengesellschaft, 80333 München (DE)
(72) Erfinder: Aschauer, Hans, 81829 München (DE); Fischer, Kai, 85598 Baldham (DE); Heintel, Markus, 81377 München (DE)

(56) Entgegenhaltungen:
- US-A1- 2014 223 583
- US-A1- 2016 171 354
- FADHEL NAWFAL F ET AL: "Approaches to maintaining provenance throughout the additive manufacturing process", WORLD CONGRESS ON INTERNET SECURITY (WORLDCIS-2013), INFONOMICS SOCIETY, 9. Dezember 2013 (2013-12-09), Seiten 82-87, XP032572430, DOI: 10.1109/WORLDCIS.2013.6751022 [gefunden am 2014-02-28]

## Beschreibung

Die Erfindung bezieht sich auf ein Verfahren und eine Vorrichtung zur Identifikation eines additiv gefertigten Werkstücks.

Additive Manufacturing gewinnt als Herstellungsverfahren an Bedeutung. Mittels des Verfahrens können bspw. Ersatzteile nicht mehr zentral produziert und gelagert werden, sondern im Bedarfsfall vor Ort erstellt werden. Dazu werden vom Hersteller/Produkt Design Owner/Rechteinhaber des Werkstücks die Designdaten zur Verfügung gestellt, und das Werkstück kann vor Ort von bspw. einem Druckdienstleister erstellt werden. Der Designinhaber (Rechteinhaber) möchte jedoch kontrollieren, wie häufig ein entsprechendes Design gedruckt wird. Insbesondere bei Safety-kritischen Bauteilen sollen insbesondere nur vom Hersteller autorisierte Bauteile in Verkehr gelangen bzw. nicht autorisierte Bauteile beim (End-) Kunden erkannt werden.

In der Vergangenheit gab es bereits Proof-of-Concept Angriffe, in denen durch die Manipulation von Modelldateien die Güte des additiv gefertigten Werkstücks bewusst reduziert wurde und damit den Qualitätsvorgaben des Herstellers nicht mehr genügten. Diese Veränderungen waren von einem Nutzer des Werkstücks nicht erkennbar.

Aus dem Stand der Technik sind das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1 und das Dokument US 8 843 761 B2 bekannt.

Aus US 2014/223583 A1 ist ein System und Verfahren zum Verwalten von digitaler Produktion, insbesondere 3D-Druck, bekannt. Das System umfasst ein Lesegerät, welches das Werksstück nach der Fertigung authentifiziert, indem physikalische Merkmale mit Designvorgaben verglichen werden. Es kann eine Zertifizierung des Werksstücks erfolgen, wenn die Qualität des Produktionsergebnisses genügend ist.

In Fadhel et al. "Approaches to maintaining provenance throughout the additive manufacturing process", WORLD CONGRESS ON INTERNET SECURITY (WORLDCIS-2013), INFONOMICS SOCIETY, 9. Dezember 2013 (2013-12-09), Seiten 82-87, XP032572430, DOI: 10.1109/WORLDCIS.2013.6751022 werden Lösungsansätze beschrieben, um die Herkunftsangaben beim Additiven Fertigungsprozess beizubehalten. Es werden die Rahmenbedingungen, um digitale und physikalische Objekte zu signieren beschrieben.

Eine Aufgabe der vorliegenden Erfindung ist es ein Verfahren und eine Vorrichtung zum Identifizieren eines additiven Werkstücks bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zur Identifikation eines additiv gefertigten Werkstücks mit den Verfahrensschritten:
a) Erfassen des additiv gefertigten Werkstücks mittels eines Erfassungsgerätes, wobei Werkstückdaten über individuelle Merkmale des additiv gefertigten Werkstücks erfasst werden;
b) Zuordnen der Werkstückdaten zu dem additiv gefertigten Werkstück;
c) Vergleichen der Werkstückdaten mit Referenzdaten für das additiv gefertigte Werkstück;
d) Erzeugen eines digitalen Zertifikates, wenn Abweichungen der Werkstückdaten gegenüber den Referenzdaten innerhalb eines vorgegebenen Toleranzbereichs liegen.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter "Bereitstellen" kann im Zusammenhang mit der Erfindung beispielsweise ein Laden oder ein Speichern, beispielsweise auf oder von einem Speichermodul verstanden werden. Unter "Bereitstellen" kann insbesondere auch ein Übertragen von Daten (z. B. Modelldaten, Werkstückdaten, digitales Zertifikat) zwischen Kommunikationspartnern verstanden werden (z. B. dem Dienstleister und dem Rechteinhaber)

Unter "digitalen Zwilling" (engl. Digital Twin) kann im Zusammenhang mit der Erfindung beispielsweise ein digitales Abbild, insbesondere in Form eines Datenmodells oder einer Datenstruktur, eines realen Produkts, (technischen) Gegenstandes oder eines (physikalischen) Objektes verstanden werden. Dies kann insbesondere für das additiv gefertigte Werkstück realisiert werden. Insbesondere ist der Begriff digitaler Zwilling auch in den folgenden Patentanmeldungen erläutert: WO2016/141998 oder WO2017/045789.

Das Verfahren bzw. die Erfindung ist dahingehend vorteilhaft, damit ein Kunde/Käufer eines additiv gefertigten Werkstücks überprüfen kann, ob die Güte des additiv gefertigten Werkstücks (z. B. ein gedruckten Bauteil) mit den vom Hersteller geforderten Vorgaben übereinstimmt. Der Hersteller kann dabei insbesondere eine Anzahl autorisierter Werkstücke kontrollieren und/oder überwachen. Zudem kann insbesondere im Schadensfall nachgewiesen werden, ob ein vom Hersteller autorisiertes Werkstück eingesetzt wurde.

Bei einer ersten Ausführungsform des Verfahrens wird ein Herstellen des additiv gefertigten Werkstücks und das Erfassen durch einen Dienstleister durchgeführt, wobei das Zuordnen, das Vergleichen und das Erzeugen durch einen Rechteinhaber des additiv gefertigten Werkstücks durchgeführt wird. Hierzu werden durch den Dienstleister die Werkstückdaten vorzugsweise an den Rechteinhaber übermittelt.

Das Verfahren ist dahingehend vorteilhaft, um insbesondere die Herstellung des additiv gefertigten Werkstücks an den Dienstleister auszulagern, aber der Rechteinhaber des Werkstücks dennoch eine Qualität des additiv gefertigten Werkstücks überprüfen kann.

Bei einer weiteren Ausführungsform sind die individuellen Merkmale zufällige Artefakte des Herstellungsprozesses.

Das Verfahren ist dahingehend vorteilhaft, um insbesondere eindeutige Merkmale des additiv gefertigten Werkstücks zu erfassen. Hierdurch kann insbesondere auf einfache Weise eine Art digitaler Fingerabdruck gebildet werden.

Bei einer weiteren Ausführungsform des Verfahrens wird durch das digitale Zertifikat angegeben, dass das additiv gefertigte Werkstück den Toleranzbereich einhält.

Das Verfahren ist dahingehend vorteilhaft, damit insbesondere ein Kunde/Käufer des additiv gefertigten Werkstücks überprüfen kann, dass das additiv gefertigte Werkstück beispielsweise den Toleranzbereich einhält.

Bei einer weiteren Ausführungsform des Verfahrens wird anhand der Werkstückdaten ein eindeutiger Identifizierungswert gebildet.

Das Verfahren ist dahingehend vorteilhaft, um insbesondere auf einfache Weise einen eindeutigen Identifizierungswert (z. B. ein digitaler Fingerabdruck) zu berechnen.

Bei einer weiteren Ausführungsform des Verfahrens sind die Werkstückdaten und/oder der eindeutige Identifizierungswert und/oder der/eine Identifikationsnummer im digitalen Zertifikat enthalten.

Das Verfahren ist dahingehend vorteilhaft, um insbesondere eine Überprüfung des additiv gefertigten Werkstücks zu erleichtern. Hierzu kann beispielsweise ein Kunde/Käufer des additiv gefertigten Werkstücks über ein Webinterface des Rechteinhabers überprüfen, ob dieser tatsächlich das digitale Zertifikat und/oder die Werkstückdaten und/oder der eindeutige Identifizierungswert und/oder der eine Identifikationsnummer ausgegeben hat. Insbesondere kann die Identifikationsnummer der eindeutige Identifizierungswert sein oder die Identifikationsnummer geht in den eindeutigen Identifizierungswert ein. Vorzugsweise lässt sich im letzteren Fall die Identifikationsnummer wieder aus dem eindeutigen Identifizierungswert herausrechnen.

Bei einer weiteren Ausführungsform des Verfahrens sind der eindeutige Identifizierungswert und/oder die Identifikationsnummer auf das additiv gefertigte Werkstück aufgebracht.

Das Verfahren ist dahingehend vorteilhaft, um es insbesondere einem Kunden/Käufer des additiv gefertigten Werkstücks die Überprüfung der digitalen Signatur zu erleichtern. Hierzu können beispielsweise der eindeutige Identifizierungswert und/oder die Identifikationsnummer als Aufkleber, Sicherheitssiegel auf dem additiv gefertigten Werkstück aufgebracht sein. Alternativ oder zusätzlich können beispielsweise der eindeutige Identifizierungswert und/oder die Identifikationsnummer auch in das Werkstück eingearbeitet werden (z. B. als eine Gravur, eingestanzte Ziffernfolge usw.). Alternativ oder zusätzlich können insbesondere durch einen RFID-Chip (z. B. in einem Sicherheitssiegel enthalten), der auf das additiv gefertigte Werkstück aufgeklebt oder der in das additiv gefertigte Werkstück eingearbeitet wird (z. B. in Schichten des additiv gefertigten Werkstücks eingeklebt wird), beispielsweise die digitale Signatur und/oder der eindeutige Identifizierungswert und/oder die Identifikationsnummer bereitgestellt werden. Das ist insbesondere dahingehend vorteilhaft, um eine direkte Zuordnung des Werkstücks und der digitalen Signatur und/oder des eindeutigen Identifizierungswerts und/oder der Identifikationsnummer zu erleichtern.

Bei einer weiteren Ausführungsform des Verfahrens sind die Werkstückdaten und/oder der eindeutige Identifizierungswert und/oder die/eine Identifikationsnummer im digitalen Zertifikat enthalten.

Bei einer weiteren Ausführungsform des Verfahrens wird mittels des eindeutigen Identifizierungswerts und/oder der Identifikationsnummer das additiv gefertigte Werkstück einem digitalen Zwilling zugeordnet und/oder umgekehrt.

Das Verfahren ist dahingehend vorteilhaft, um insbesondere die Verarbeitung des digitalen Zertifikats zu erleichtern bzw. die Zuordnung des digitalen Zertifikats zum additiv gefertigten Werkstück wird hierdurch erleichtert.

Bei einer weiteren Ausführungsform des Verfahrens wird das digitale Zertifikat dem Dienstleister bereitgestellt und das digitale Zertifikat wird dem Dienstleister insbesondere nach einem Entrichten einer Lizenzgebühr an den Rechteinhaber bereitgestellt.

Bei einer weiteren Ausführungsform des Verfahrens wird das digitale Zertifikat durch einen digitalen Zwilling bereitgestellt.

Das Verfahren ist dahingehend vorteilhaft, um insbesondere die Abrechnung von Lizenzgebühren für das additiv gefertigte Werkstück zu erleichtern.

Das Verfahren ist dahingehend vorteilhaft, um insbesondere die Verarbeitung des digitalen Zertifikats zu erleichtern bzw. die Zuordnung des digitalen Zertifikats zum additiv gefertigten Werkstück wird hierdurch erleichtert.

Bei einer weiteren Ausführungsform des Verfahrens ist mittels des digitalen Zertifikats überprüfbar, ob es sich um ein von dem Rechteinhaber autorisiertes additiv gefertigtes Werkstück handelt.

Dies kann beispielsweise dadurch realisiert werden, dass das additiv gefertigten Werkstücks (inkl. individuelle Merkmale) mittels eines weiteren Erfassungsgerätes (z. B. 3D_S1), insbesondere durch einen Käufer des Werkstücks, erfasst wird und insbesondere entsprechend weitere Werkstückdaten erfasst werden (analog zu Anspruch 1). Danach kann beispielsweise das digitale Zertifikat auf seine Authentizität überprüft werden (z. B. durch den Käufer des Werkstücks) und/oder es kann insbesondere überprüft werden, ob die weiteren Werkstückdaten (also die vom Käufer) mit den im digitalen Zertifikat gespeicherten Werkstückdaten übereinstimmen bzw. den Toleranzbereich einhalten (dies kann z. B. durch den Käufer des Werkstücks erfolgen).

Gemäß einem weiteren Aspekt betrifft die Erfindung eine Vorrichtung zur Identifikation eines additiv gefertigten Werkstücks aufweisend:
- ein Erfassungsgerät zum Erfassen des additiv gefertigten Werkstücks, wobei Werkstückdaten über individuelle Merkmale des additiv gefertigten Werkstücks erfasst werden;
- ein Zuordnungsmodul zum Zuordnen der Werkstückdaten zu dem additiv gefertigten Werkstück;
- ein Vergleichsmodul zum Vergleichen der Werkstückdaten mit Referenzdaten für das additiv gefertigte Werkstück;
- ein Erzeugungsmodul zum Erzeugen eines digitalen Zertifikates, wenn Abweichungen der Werkstückdaten gegenüber den Referenzdaten innerhalb eines vorgegebenen Toleranzbereichs liegen.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen).

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass die erfindungsgemäße Vorrichtung erstellt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein weiteres Ausführungsbeispiel der Erfindung;
- Fig. 3: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

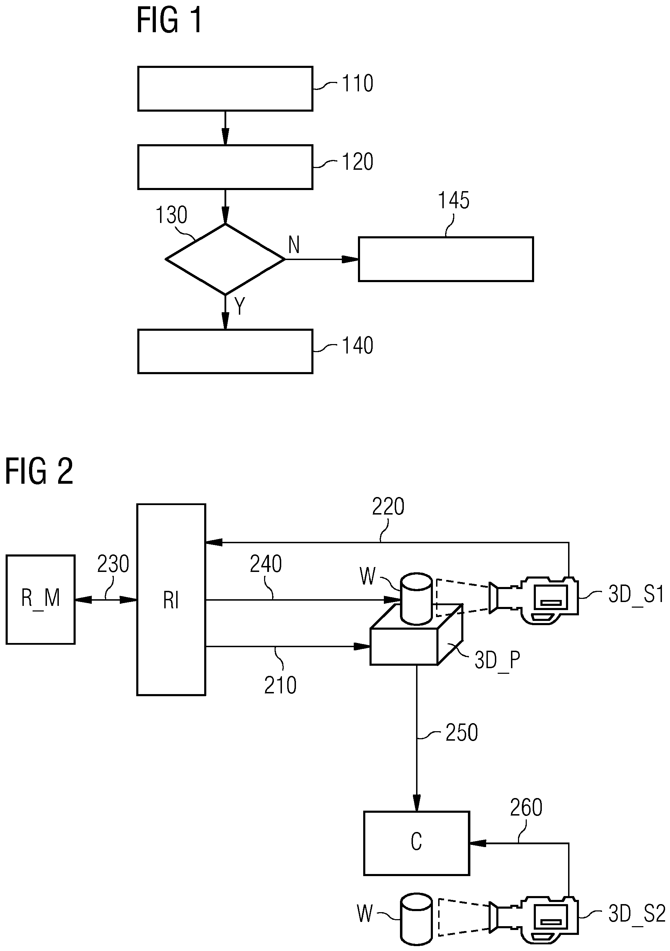

Die Fig. 1 zeigt ein erstes Ausführungsbeispiel der Erfindung als ein Ablaufdiagramm des erfindungsgemäßen Verfahrens zur Identifikation eines additiv gefertigten Werkstücks. Das Verfahren wird vorzugsweise rechnergestützt realisiert. Das Verfahren kann beispielsweise mittels des digitalen Zertifikats auch zum Autorisieren oder Zertifizieren des additiv gefertigten Werkstücks verwendet werden. Insbesondere kann das erfindungsgemäße Verfahren zur a-posteriori (also nach dem Herstellen des additiv gefertigten Werkstücks) Lizenzierung des additiv gefertigten Werkstücks verwendet werden.

Zunächst wird das additiv gefertigte Werkstück durch einen Dienstleister hergestellt, indem z. B. ein 3D Druckverfahren verwendet wird. Modelldaten die für das Fertigen des additiv gefertigten Werkstück notwendig sind, können beispielsweise von einem Rechteinhaber der Modelldaten über eine Webplattform bereitgestellt werden oder der Rechteinhaber übermittelt die Modelldaten mittels anderer Kommunikationsmittel an den Dienstleister (z. B. via Email). Die Modelldaten können dabei beispielsweise auch kryptographisch geschützt sein (z. B. durch eine digitale Signatur/ein digitales Zertifikat des Rechteinhabers). Zusätzlich oder alternativ könnte ein Verschlüsselungsverfahren eingesetzt werden, um die Modelldaten kryptographisch zu schützen.

Das Verfahren umfasst einen ersten Verfahrensschritt 110 zum Erfassen des additiv gefertigten Werkstücks mittels eines Erfassungsgerätes, wobei Werkstückdaten über individuelle Merkmale des additiv gefertigten Werkstücks erfasst werden. Dieser Verfahrensschritt kann beispielsweise durch den Dienstleister realisiert werden. Bei dem Erfassungsgerät kann es sich beispielsweise um einen 3D-Scanner, einen Oberflächenscanner oder ein Mikroskop handeln, die zumindest einen Teil der Oberfläche des additiv gefertigten Werkstücks erfassen können. Insbesondere ist der zumindest ein Teil der Oberfläche vorgegeben (z. B. durch den Rechteinhaber) und vorzugsweise durch die Modelldaten vorgegeben.

Insbesondere kann z. B. durch einen 3D-Scanner auch die gesamte Oberfläche des additiv gefertigten Werkstücks erfasst werden.

Bei den individuellen Merkmalen kann es sich beispielsweise um zufällige Artefakte des Herstellungsprozesses handeln (z. B. Kratzer und Unebenheiten auf der Oberfläche des additiv gefertigten Werkstücks). Es ist beispielsweise aber auch denkbar, dass diese individuellen Merkmale vorgegebene Merkmale sind, die während des Fertigens erzeugt werden. Hierzu können die Modelldaten beispielsweise entsprechende Informationen enthalten. In einer weiteren Alternative sind die individuellen Merkmale eine Kombination aus zufälligen Artefakten und vorgegebenen Merkmalen.

Die Werkstückdaten werden dann vorzugsweise von dem Dienstleister an den Rechteinhaber übermittelt.

Das Verfahren umfasst dann einen zweiten Verfahrensschritt 120 zum Zuordnen der Werkstückdaten zu dem additiv gefertigten Werkstück. Diese Zuordnung wird vorzugsweise durch den Rechteinhaber durchgeführt. Dabei kann beispielsweise anhand der Werkstückdaten ein eindeutiger Identifizierungswert gebildet werden, der beispielsweise einen digitalen Fingerabdruck realisiert.

Das Zuordnen kann beispielsweise dadurch realisiert werden, indem die Werkstückdaten beispielswese in einem digitalen Zwilling (z. B. eine Instanziierung des digitalen Zwillings Instanz mit einem Prozessor, die dem Werkstück zugeordnet ist) des gerade vermessenen Werkstücks gespeichert werden. Mit anderen Worten können die Werkstückdaten beispielsweise in einer Instanz einer Datenstruktur (z. B. der entsprechende digitale Zwilling des Werkstücks), die dem Werkstück zugeordnet ist, gespeichert werden.

Das Verfahren umfasst einen dritten Verfahrensschritt 130 zum Vergleichen der Werkstückdaten mit Referenzdaten für das additiv gefertigte Werkstück. Hierbei vergleicht beispielsweise der Rechteinhaber, die Werkstückdaten mit den Referenzdaten. Die Referenzdaten können beispielsweise die Modelldaten sein oder Daten eines Referenzmodells sein.

Das Verfahren umfasst einen vierten Verfahrensschritt 140 zum Erzeugen eines digitalen Zertifikates, wenn Abweichungen der Werkstückdaten gegenüber der Referenzdaten innerhalb eines vorgegebenen Toleranzbereichs liegen (in Fig. 1 durch Y angezeigt). Dies erfolgt verzugsweise beim Vergleichen (Schritt 130) .

Wenn die Abweichungen den Toleranzbereich überschreiten (in Fig. 1 durch N dargestellt) wird kein Zertifikat erstellt (Schritt 145). Diese Verfahrensschritte 140 und/oder 145 können beispielsweise durch den Rechteinhaber realisiert werden. Der Toleranzbereich kann beispielsweise durch Schwellwerte realisiert werden. Alternativ oder zusätzlich wäre es beispielsweise auch möglich, den Grad der festgestellten Übereinstimmung/Güte der Werkstückdaten gegenüber den Referenzdaten mit in das Zertifikat aufzunehmen. In dieser Variante, könnte dann insbesondere in jedem Fall ein Zertifikat ausgestellt werden - ggf. mit der Aussage, dass das Werkstück nicht in ausreichenden Maße mit den Referenzdaten übereinstimmt (also der Toleranzbereich überschritten wird).

Mit anderen Worten könnte das Zertifikat beispielsweise auch im Negativfall erzeugt werden und das Prüfergebnis (negativ/positiv) im Zertifikat dokumentiert werden. (Auch wenn das Zertifikat mit dem negativen Prüfergebnis in Folge nie wieder zum Einsatz kommt). Ggf. kann auch der Grad der Abweichung im Zertifikat dokumentiert werden. Der Akzeptanzbereich kann dann vom Endanwender gewählt werden. Dies kann beispielsweise sinnvoll sein, wenn der Hersteller/Rechteinhaber eine Herstellerfreigabe für weniger anspruchsvolle Einsatzbereiche in Betracht zieht - z. B. das Werkstück noch als Mängelexemplar verkauft.

Ein Beispiel wäre, dass Oberflächenunebenheiten zumindest in einem Teilbereich der Oberfläche des additiv gefertigten Werkstücks höchstens Vertiefungen (zufällige Artefakte) bis zu 0,5 mm (Toleranzbereich) zugelassen sind. Weist das additiv gefertigte Werkstück eine Vertiefung mit 0,7 mm auf, so wird kein digitales Zertifikat ausgestellt. Weist das additiv gefertigte Werkstück z. B. nur Vertiefungen bis 0,3 mm wird das digitale Zertifikat ausgestellt.

Danach wird das digitale Zertifikat für das additiv gefertigte Werkstück bereitgestellt.

Dabei kann das digitale Zertifikat beispielsweise dem Dienstleister bereitgestellt werden (z. B. als Download bereitgestellt werden), insbesondere nachdem der Dienstleister eine Lizenzgebühr an den Rechteinhaber entrichtet hat.

In einer Variante werden der eindeutige Identifizierungswert und/oder die Identifikationsnummer auf das additiv gefertigte Werkstück aufgebracht. Dies kann beispielsweise durch den Dienstleister erfolgen.

In einer weiteren Variante wird mittels des eindeutigen Identifizierungswerts und/oder der Identifikationsnummer das additiv gefertigte Werkstück einem digitalen Zwilling zugeordnet und/oder ein digitaler Zwilling wird dem additiv gefertigten Werkstück zugeordnet.

In einer weiteren Variante wird das digitale Zertifikat durch einen digitalen Zwilling bereitgestellt.

Mittels des digitalen Zertifikats kann insbesondere überprüft werden (z. B. von einem Käufer des additiv gefertigten Werkstücks), ob es sich um ein von dem Rechteinhaber autorisiertes additiv gefertigtes Werkstück handelt.

In einer weiteren Variante werden der eindeutige Identifizierungswert und/oder die Identifikationsnummer als Aufkleber, Sicherheitssiegel auf dem additiv gefertigten Werkstück aufgebracht sein. Alternativ oder zusätzlich können der eindeutige Identifizierungswert und/oder die Identifikationsnummer auch in das Werkstück eingearbeitet werden (z. B. als eine Gravur, eingestanzte Ziffernfolge usw.).

In einer weiteren Variante werden durch einen RFID-Chip (z. B. in einem Sicherheitssiegel enthalten), der auf das additiv gefertigte Werkstück aufgeklebt (z. B. als Sicherheitssiegel) oder eingearbeitet wird (z. B. in Schichten des additiv gefertigten Werkstücks eingeklebt wird), beispielsweise die digitale Signatur und/oder der eindeutige Identifizierungswert und/oder die Identifikationsnummer bereitgestellt. Der RFID Chip ist vorzugsweise nur einmalig beschreibbar, sodass die Daten (z. B. die digitale Signatur und/oder der eindeutige Identifizierungswert und/oder die Identifikationsnummer) beispielsweise durch den Dienstleister (nachdem dieser die Daten erhalten hat) auf den RFID Chip gespeichert werden können und diese vorzugsweise unveränderlich gespeichert sind/werden.

Das vorgeschlagene Verfahren kann sowohl ergänzend als auch alternativ zu a-priori (es wird z. B. eine Lizenz vor der Herstellung an den Dienstleister verkauft) Lizenzierungsverfahren eingesetzt werden.

Das Ausführungsbeispiel aus Fig. 1 wird nun anhand des Ausführungsbeispiels von Fig. 2 weiter konkretisiert. Entsprechend können Merkmale des ersten Ausführungsbeispiels und seiner Varianten (Fig. 1) und des zweiten Ausführungsbeispiels und seiner Varianten(Fig. 2) miteinander kombiniert werden.

Zunächst stellt beispielsweise ein Rechteinhaber (z. B. ein Hersteller von Ersatzteilen) sein Design (z. B. als Modelldaten) zur Verfügung 210 und das additiv gefertigte Werkstück W (oder nur als Werkstück W bezeichnet) wird beim Dienstleister vor Ort auf einem 3D-Drucker 3D_P erstellt.

Anschließend wird das Werkstück W mit einem (geeigneten) 3D-Scanner 3D_S1 vermessen. Insbesondere werden dabei die Werkstückdaten erfasst, die das Werkstück W im Rahmen der Fertigungsstreuung bzw. des Fertigens individuell identifizieren ("Fingerabdruck", z. B. Oberflächenstruktur). Dies sind beispielsweise die individuellen Merkmale des Werkstücks W. Aus den Werkstückdaten kann beispielsweise zu Bildung eines digitalen Fingerabdrucks ein eindeutiger Identifizierungswert gebildet werden, indem z. B. über die Werkstückdaten ein kryptographischer Hash oder eine kryptographische Prüfsumme oder ein Hash oder eine Prüfsumme gebildet wird.

Dabei kann unter einem geeigneten Erfassungsgerät/3D-Scanner, beispielsweise ein Erfassungsgerät/3D-Scanner verstanden werden, dessen optische und/oder räumliche Auflösung ausreichend ist, um zufällige Artefakte des Herstellungsverfahrens zu erfassen. Entsprechend ist die optische und/oder räumliche Auflösung des Erfassungsgerätes/3D-Scanners höher als eine Fertigungsgenauigkeit des Additive Manufacturing Prozesses (auch additive Fertigung oder additiver Fertigungsprozess genannt) mit dem das additiv gefertigte Werkstück W hergestellt wird.

Die erfassten Werkstückdaten werden vorzugsweise derart ausgewählt, dass eine willentliche Beeinflussung der Produktion bzw. der Fertigung/Herstellung nicht oder nur mit erheblichen Aufwand möglich ist (d.h. es soll sich um zufällige Artefakte des Herstellungsverfahrens handeln). Mit anderen Worten sind die individuellen Merkmale zufällige Artefakte, deren optische und/oder räumliche Auflösung bzw. Größe höher ist als die Fertigungsgenauigkeit des Additive Manufacturing Prozesses, mit dem das additiv gefertigte Werkstück W hergestellt wird.

Die Werkstückdaten (z. B. als Messdatensatz übermittelt) werden dann an den Rechteinhaber (Hersteller) geschickt (Schritt 220) .

Der Rechteinhaber gleicht die Werkstückdaten gegen die Referenzdaten R_M ab (z. B. unter Verwendung eines Referenzmodells) (Schritt 230).

Sofern die Werkstückdaten innerhalb eines geforderten Toleranzbereichs liegen, wird das digitale Zertifikat (oder auch nur als Zertifikat bezeichnet) erstellt (Schritt 240).

Das Zertifikat bestätigt insbesondere, dass die Werkstückdaten im Toleranzbereich des Referenzmodells/der Referenzdaten R_M liegen und somit vom Rechteinhaber autorisiert wurden.

Das digitale Zertifikat kann beispielsweise eine digitale Signatur des Rechteinhabers über die Werkstückdaten über die individuellen Merkmale des Werkstücks W ("Fingerabdruck") enthalten. Alternativ oder zusätzlich kann das digitale Zertifikat die zugrundeliegenden Werkstückdaten umfassen, um einen späteren Vergleich zu erleichtern. Daneben kann das Zertifikat weitere Hilfsdaten (z. B. eine offen auf das Werkstück aufgedruckte Identifikationsnummer) enthalten, die eine spätere Zuordnung zwischen dem Werkstück W und dem digitalen Zertifikat erleichtert.

In einer Variante kann dies eine Referenz auf den digitalen Zwilling des Werkstücks W sein.

In einer weiteren Variante wird das Zertifikat ggf. nur nach der Abrechnung der Lizenzkosten bereitgestellt (also z. B. der Dienstleister dem Rechteinhaber eine Lizenzgebühr bezahlt hat) .

Das Werkstück W wird vorzugsweise gemeinsam mit dem Zertifikat an den Kunden/Käufer übergeben 250. Das Zertifikat kann beispielsweise über den digitalen Zwilling des Werkstücks W bereitgestellt werden.

Der Kunde/Käufer des Werkstücks W kann anhand des Zertifikats entscheiden, ob es sich um ein vom Rechteinhaber autorisiertes Werkstück W handelt (Schritt 260). Insbesondere in Safety-sensiblen Bereichen kann durch prozedurale Vorschriften verhindert werden, dass nicht autorisierte Werkstücke verwendet werden.

Hierzu kann der Käufer das digitale Zertifikat auf seine Authentizität überprüfen. Zusätzlich oder alternativ kann der Käufer mittels eines weiteren geeigneten 3D-Scanners 3D_S2 weitere Werkstückdaten erfassen und diese mit den Daten aus dem digitalen Zertifikat abgleichen, um die Authentizität zu überprüfen. Stimmen die weiteren Werkstückdaten und die Daten des digitalen Zertifikats (z. B. die Werkstückdaten im digitalen Zertifikat, eindeutiger Identifizierungswert, Identifikationsnummer usw.) überein, so wird durch den Käufer die Authentizität des Werkstücks W festgestellt. Stimmen die weiteren Werkstückdaten und die Daten des digitalen Zertifikats nicht überein, kann der Käufer sich an den Rechteinhaber wenden und ihn über das potentiell gefälschte Werkstück W informieren. Für dieses Überprüfen kann der Käufer ggf. auch einen weiteren eindeutigen Identifizierungswert anhand der Werkstückdaten berechnen analog zu der oben genannten Beschreibung. Der Käufer vergleicht dann beispielsweise den eindeutigen Identifizierungswert mit dem weiteren eindeutigen Identifizierungswert, um die Authentizität zu überprüfen.

In einer weiteren Variante umfassen die Modelldaten Angaben zu Strukturen/Flächen des Werkstücks W, in denen eine erhöhte Fertigungstoleranz/Variation bestimmter Technologieparameter (z. B. Fertigungsparameter) innerhalb eines bestimmten Bereichs funktional zulässig ist. Solche Strukturen/Flächen bzw. Bereiche des Werkstücks W werden bevorzugt verwendet, um die Werkstückdaten über die individuelle Merkmale des additiv gefertigten Werkstücks W zu erfassen.

In einer weiteren Variante sind die individuellen Merkmale des additiv gefertigten Werkstücks W nicht direkt das Ergebnis des Additive Manufacturing Prozesses. Stattdessen wird im Additive Manufacturing Prozess eine Stelle des Werkstücks W so vorbereitet/bearbeitet, dass sich dort anschließend durch einen weiteren Fertigungsvorgang (beispielsweise mit teils zufälligem Ausgang) eine Stelle mit den individuellen Merkmalen erzeugen lässt (z. B. Sollbruchstelle).

In einer weiteren Variante wird das Werkstück W selbst als Träger des Zertifikats verwendet. Beispielsweise werden nach Ablauf eines ersten Fertigungsschritts die Werkstückdaten an einer Stelle (z. B. der zumindest eine Teil der Oberfläche) des Werkstücks W vermessen/erfasst/ermittelt und während eines zweiten Fertigungsschritts wird das Zertifikat oder die Signatur des Zertifikates in das Werkstück eingebracht/auf das Werkstück aufgebracht.

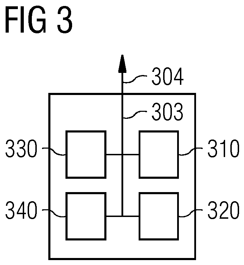

Die Fig. 3 zeigt ein weiteres Ausführungsbeispiel der Erfindung als Vorrichtung zur Identifikation eines additiv gefertigten Werkstücks.

Die Vorrichtung umfasst ein Erfassungsgerät 310, ein Zuordnungsmodul 320, ein Vergleichsmodul 330, ein Erzeugungsmodul 340 und eine optionale erste Kommunikationsschnittstelle 304, die über einen ersten Bus 303 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 303 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Erfassungsgerät 310 ist zum Erfassen des additiv gefertigten Werkstücks eingerichtet, wobei Werkstückdaten über individuelle Merkmale des additiv gefertigten Werkstücks erfasst werden.

Das Erfassungsgerät 310 kann beispielsweise als 3D-Scanner oder als Oberflächenscanner oder als Oberflächenmikroskop realisiert sein.

Das Zuordnungsmodul 320 ist zum Zuordnen der Werkstückdaten zu dem additiv gefertigten Werkstück eingerichtet.

Das Zuordnungsmodul 320 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Werkstückdaten zugeordnet werden.

Das Vergleichsmodul 330 ist zum Vergleichen der Werkstückdaten mit Referenzdaten für das additiv gefertigte Werkstück eingerichtet.

Das Vergleichsmodul 330 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Werkstückdaten verglichen werden.

Das Erzeugungsmodul 340 ist zum Bilden zum Erzeugen eines digitalen Zertifikates eingerichtet, wenn Abweichungen der Werkstückdaten gegenüber den Referenzdaten innerhalb eines vorgegebenen Toleranzbereichs liegen.

Das Erzeugungsmodul 340 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass die digitale Signatur berechnet wird.

Bei weiteren Ausführungsformen der Vorrichtung umfasst die Vorrichtung zumindest ein weiteres Modul oder mehrere weitere Module zur Durchführung des erfindungsgemäßen Verfahrens (oder einer seiner Ausführungsformen/Varianten).

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zur Identifikation eines additiv gefertigten Werkstücks (W) mit den Verfahrensschritten:
a) Erfassen (110) des additiv gefertigten Werkstücks (W) mittels eines Erfassungsgerätes (310, 3D_S1), wobei Werkstückdaten über individuelle Merkmale des additiv gefertigten Werkstücks (W) erfasst werden;
b) Zuordnen (120) der Werkstückdaten zu dem additiv gefertigten Werkstück (W);
c) Vergleichen (130) der Werkstückdaten mit Referenzdaten (R M) für das additiv gefertigte Werkstück (W);
d) Erzeugen (140) eines digitalen Zertifikates, wenn Abweichungen der Werkstückdaten gegenüber den Referenzdaten (R_M) innerhalb eines vorgegebenen Toleranzbereichs liegen;
e) Bilden eines eindeutigen Identifizierungswerts anhand der Werkstückdaten,
wobei die Werkstückdaten und der eindeutige Identifizierungswert und/oder eine Identifikationsnummer im digitalen Zertifikat enthalten sind, und
f) Zuordnen des additiv gefertigten Werkstücks (W) einem digitalen Zwilling und/oder umgekehrt mittels des eindeutigen Identifizierungswerts und/oder der im digitalen Zertifikat enthaltenen Identifikationsnummer.

2. Verfahren nach Anspruch 1, wobei
- ein Herstellen des additiv gefertigten Werkstücks (W) und das Erfassen (110) durch einen Dienstleister durchgeführt wird,
- das Zuordnen (120), das Vergleichen (130) und das Erzeugen (140) durch einen Rechteinhaber des additiv gefertigten Werkstücks (W) durchgeführt wird,
- wobei der Dienstleister hierzu die Werkstückdaten an den Rechteinhaber übermittelt.

3. Verfahren nach Anspruch 1 oder 2, wobei die individuellen Merkmale zufällige Artefakte des Herstellungsprozesses sind.

4. Verfahren nach einem der vorhergehenden Ansprüche, wobei durch das digitale Zertifikat angegeben wird, dass das additiv gefertigte Werkstück (W) den Toleranzbereich einhält.

5. Verfahren nach einem der vorhergehenden Ansprüche, wobei der eindeutige Identifizierungswert und/oder die Identifikationsnummer auf das additiv gefertigte Werkstück (W) aufgebracht sind.

6. Verfahren nach einem der vorhergehenden Ansprüche, insbesondere der Ansprüche 2-5, wobei
- das digitale Zertifikat dem Dienstleister bereitgestellt wird,
- das digitale Zertifikat dem Dienstleister insbesondere nach einem Entrichten einer Lizenzgebühr an den Rechteinhaber bereitgestellt wird.

7. Verfahren nach einem der vorhergehenden Ansprüche, wobei das digitale Zertifikat durch einen digitalen Zwilling bereitgestellt wird.

8. Verfahren nach einem der vorhergehenden Ansprüche, wobei mittels des digitalen Zertifikats überprüfbar ist, ob es sich um ein von dem Rechteinhaber autorisiertes additiv gefertigtes Werkstück (W) handelt.

9. Vorrichtung zur Identifikation eines additiv gefertigten Werkstücks (W) aufweisend:
- ein Erfassungsgerät (310, 3D_S1) zum Erfassen des additiv gefertigten Werkstücks, wobei Werkstückdaten über individuelle Merkmale des additiv gefertigten Werkstücks (W) erfasst werden;
- ein Zuordnungsmodul (320) zum Zuordnen der Werkstückdaten zu dem additiv gefertigten Werkstück (W);
- ein Vergleichsmodul (330) zum Vergleichen der Werkstückdaten mit Referenzdaten für das additiv gefertigte Werkstück (W) ;
- ein Erzeugungsmodul (340) zum Erzeugen eines digitalen Zertifikates, wenn Abweichungen der Werkstückdaten gegenüber den Referenzdaten innerhalb eines vorgegebenen Toleranzbereichs liegen,
wobei ein eindeutiger Identifizierungswert anhand der Werkstückdaten gebildet wird, wobei die Werkstückdaten und der eindeutige Identifizierungswert und/oder eine Identifikationsnummer im digitalen Zertifikat enthalten sind, und wobei das additiv gefertigte Werkstück (W) einem digitalen Zwilling und/oder umgekehrt mittels des eindeutigen Identifizierungswerts und/oder der im digitalen Zertifikat enthaltenen Identifikationsnummer zugeordnet wird.

10. Computerprogrammprodukt mit Programmbefehlen zur Durchführung der Verfahren nach einem der Ansprüche 1 - 8.

11. Computerprogrammprodukt mit Programmbefehlen für ein Erstellungsgerät, das mittels der Programmbefehle konfiguriert wird, die Vorrichtung nach Anspruch 9 zu erstellen.

12. Bereitstellungsvorrichtung für das Computerprogrammprodukt nach Anspruch 10, wobei die Bereitstellungsvorrichtung das Computerprogrammprodukt speichert und/oder bereitstellt.

## Claims

1. Method for identifying an additively manufactured workpiece (W), having the method steps of:
a) capturing (110) the additively manufactured workpiece (W) by means of a capture device (310, 3D_S1), wherein workpiece data relating to individual features of the additively manufactured workpiece (W) are captured;
b) assigning (120) the workpiece data to the additively manufactured workpiece (W);
c) comparing (130) the workpiece data with reference data (R_M) for the additively manufactured workpiece (W);
d) generating (140) a digital certificate if differences between the workpiece data and the reference data (R_M) are within a predefined tolerance range;
e) forming a unique identification value on the basis of the workpiece data,
wherein the workpiece data and the unique identification value and/or an identification number are contained in the digital certificate, and
f) assigning the additively manufactured workpiece (W) to a digital twin and/or vice versa by means of the unique identification value and/or the identification number contained in the digital certificate.

2. Method according to Claim 1, wherein
- production of the additively manufactured workpiece (W) and the capturing (110) are performed by a service provider,
- the assigning (120), the comparing (130) and the generating (140) are performed by a rights holder for the additively manufactured workpiece (W),
- wherein the service provider transmits the workpiece data to the rights holder for this purpose.

3. Method according to Claim 1 or 2, wherein the individual features are random artefacts of the production process.

4. Method according to one of the preceding claims, wherein the digital certificate indicates that the additively manufactured workpiece (W) is compliant with the tolerance range.

5. Method according to one of the preceding claims, wherein the unique identification value and/or the identification number are put on the additively manufactured workpiece (W).

6. Method according to one of the preceding claims, in particular Claims 2-5, wherein
- the digital certificate is provided to the service provider,
- the digital certificate is provided to the service provider in particular after a licence fee has been paid to the rights holder.

7. Method according to one of the preceding claims, wherein the digital certificate is provided by a digital twin.

8. Method according to one of the preceding claims, wherein the digital certificate can be used to check whether an additively manufactured workpiece (W) authorized by the rights holder is involved.

9. Apparatus for identifying an additively manufactured workpiece (W), having:
- a capture device (310, 3D_S1) for capturing the additively manufactured workpiece, wherein workpiece data relating to individual features of the additively manufactured workpiece (W) are captured;
- an assigning module (320) for assigning the workpiece data to the additively manufactured workpiece (W);
- a comparison module (330) for comparing the workpiece data with reference data for the additively manufactured workpiece (W);
- a generating module (340) for generating a digital certificate if differences between the workpiece data and the reference data are within a predefined tolerance range,
wherein a unique identification value is formed on the basis of the workpiece data, wherein the workpiece data and the unique identification value and/or an identification number are contained in the digital certificate, and wherein the additively manufactured workpiece (W) is assigned to a digital twin and/or vice versa by means of the unique identification value and/or the identification number contained in the digital certificate.

10. Computer program product having program commands for performing the methods according to one of Claims 1 - 8.

11. Computer program product having program commands for a creating device configured by means of the program commands to create the apparatus according to Claim 9.

12. Providing apparatus for the computer program product according to Claim 10, wherein the providing apparatus stores and/or provides the computer program product.

## Revendications

1. Procédé d'identification d'une pièce de fabrication additive (W) comportant les étapes de procédé suivantes :
a) détection (110) de la pièce de fabrication additive (W) au moyen d'un dispositif de détection (310, 3D_S1), des données de la pièce étant relevées grâce à des caractéristiques individuelles de la pièce de fabrication additive (W) ;
b) attribution (120) des données de la pièce à la pièce de fabrication additive (W)
c) comparaison (130) des données de la pièce avec des données de référence (R_M) de la pièce de fabrication additive (W) ;
d) création (140) d'un certificat numérique lorsque des divergences des données de la pièce par rapport aux données de référence (R_M) se situent dans une plage de tolérance prédéterminée ;
e) génération d'une valeur d'identification unique sur la base des données de la pièce,
les données de la pièce et la valeur d'identification unique et/ou le numéro d'identification unique étant compris dans le certificat numérique, et
f) attribution de la pièce (W) de fabrication additive à un jumeau numérique et/ou vice versa moyennant la valeur d'identification unique et/ou le numéro d'identification compris dans le certificat numérique.

2. Procédé selon la revendication 1, dans lequel
- la fabrication de la pièce de fabrication additive (W) et la détection (110) sont assurées par un prestataire de services,
- l'attribution (120), la comparaison (130) et la création (140) sont assurées par un titulaire de droits de la pièce de fabrication additive (W),
- le prestataire de services transmet à cet effet les données de la pièce au titulaire des droits.

3. Procédé selon la revendication 1 ou 2, dans lequel les caractéristiques individuelles sont des artefacts aléatoires du processus de fabrication.

4. Procédé selon l'une des revendications précédentes, dans lequel le certificat numérique indique que la pièce de fabrication additive (W) respecte la plage de tolérance.

5. Procédé selon l'une des revendications précédentes, dans lequel la valeur d'identification unique et/ou le numéro d'identification sont appliqués sur la pièce de fabrication additive (W).

6. Procédé selon l'une des revendications précédentes, notamment des revendications 2 à 5, dans lequel
- le certificat numérique est mis à disposition du prestataire de services,
- le certificat numérique est mis à disposition du prestataire de services notamment après paiement d'une redevance au titulaire des droits.

7. Procédé selon l'une des revendications précédentes, dans lequel le certificat numérique est mis à disposition par un jumeau numérique.

8. Procédé selon l'une des revendications précédentes, dans lequel le certificat numérique permet de vérifier s'il s'agit d'une pièce de fabrication additive (W) autorisée par le titulaire des droits.

9. Dispositif d'identification d'une pièce de fabrication additive (W), comportant :
- un dispositif de détection (310, 3D_S1) de la pièce de fabrication additive, des données de la pièce concernant des caractéristiques individuelles de la pièce (W) de fabrication additive étant détectées ;
- un module d'attribution (320) pour attribuer les données de la pièce à la pièce de fabrication additive (W) ;
- un module de comparaison (330) pour comparer les données de la pièce avec des données de référence de la pièce de fabrication additive (W) ;
- un module de création (340) pour créer un certificat numérique lorsque des divergences des données de la pièce par rapport aux données de référence se situent dans une plage de tolérance prédéterminée ;
une valeur d'identification unique étant créée sur la base des données de la pièce, les données de la pièce et la valeur d'identification unique et/ou le numéro d'identification unique étant compris dans le certificat numérique, et la pièce de fabrication additive (W) étant attribuée à un jumeau numérique et/ou vice versa moyennant la valeur d'identification unique et/ou le numéro d'identification compris dans le certificat numérique.

10. Produit de logiciel informatique comportant des instructions de programme pour réaliser le procédé selon l'une des revendications 1 à 8.

11. Produit de logiciel informatique comportant des instructions de programme pour un appareil de fabrication configuré grâce aux instructions de programme pour fabriquer le dispositif selon la revendication 9.

12. Dispositif de mise à disposition du produit de logiciel informatique selon la revendication 10, dans lequel le dispositif de mise à disposition stocke et/ou met à disposition le produit de logiciel informatique.
